# EUROPEAN PATENT APPLICATION

(11) **EP 1 655 855 A1**
(43) Date of publication of application: **10.05.2006**
(21) Application number: 04026033.3
(22) Date of filing: 03.11.2004
(51) Int. Cl.: H04B 1/713

(54) **Method of Frequency Hopping for avoiding interference**

(71) Applicant: Topspeed Technology Corp., Chung Ho City Taipei Hsien Taiwan 235 (TW)
(72) Inventor: Chi, Chung-Ping, Chung Ho City Taipei Hsien (TW)
(74) Representative: TER MEER - STEINMEISTER & PARTNER GbR

(57) **Abstract**

A method of preventing interference of signal transmission of electronic input devices, using a receiving unit that has multiple frequency channels to connect a host. The receiving unit is accompanied with software program to set up one sequence of frequency-hopping channels for each type of electronic devices such as mouse, keyboard, remote control and audio input device. The software program also defines one of the frequency-hopping channels as a starting receiving frequency channel. When a signal is transmitted from a specific type of electronic devices, the receiving unit switches the frequency to its starting receiving frequency channel for receiving such signal. When the signal has been interfered, the receiving unit automatically hops the frequency to the next available hopping frequency channel of the specific type of electronic devices until the interference is eliminated.

## Description

### BACKGROUND OF THE INVENTION

The present invention relates to a method of preventing interference of signal transmission for an electronic input product, and more particularly, to a method which uses automatic frequency-hopping function to avoid interference of a signal.

In the application of computers and the peripherals thereof, the limitation of cost and space often results in the connection of a single computer host and electronic input devices such as multiple mouse, keyboards, remote controls and audio input devices. Or for the multimedia function, a mouse, a keyboard, a remote control and an audio input device are often required and connected to the same computer. The conventional signal transmission between the computer host and the electronic input devices is performed by a switch which serves as a signal transmission medium. The hardwire connection has the limitation of the length of cables. Further, when many electronic devices are connected, the cables are easily tangled together to cause difficulty in maintenance. In addition, when the cables are worn off by mouse bite or other external forces, the connection is seriously affected.

The wireless transmission technologies such as radio-frequency (RF) transmission, the WLAN local network operative to perform bi-directional signal transmission for multiple frequency channels and the Bluetooth wireless technique have been applied to electronic products such as mouse, keyboard, remote control, and audio input devices (such as wireless microphone). The WLAN local network and Bluetooth wireless techniques both adapt the frequency of 2.4 GHz as the signal transmission frequency standard. The bi-directional operation frequency is often set up between 2420 MHz and 2460 MHz. That is, only 40 MHz operation bandwidth is provided for bi-directional signal transmission. Therefore, it is easy to cause interference between signals, such that the computer cannot properly receive the input signal or correctly determine the signal source.

### BRIEF SUMMARY OF THE INVENTION

To resolve the above drawbacks, a method of preventing interference of signal transmission of electronic input devices is provided. A receiving unit that has multiple frequency channels is used to connect a host. The receiving unit is accompanied with software program to set up one sequence of frequency-hopping channels for each type of electronic devices such as mouse, keyboard, remote control and audio input device. The software program also defines one of the frequency-hopping channels as a starting receiving frequency channel. When a signal is transmitted from a specific type of electronic devices, the receiving unit switches the frequency to its starting receiving frequency channel for receiving such signal. When the signal has been interfered, the receiving unit automatically hops the frequency to the next available hopping frequency channel of the specific type of electronic devices until the interference is eliminated.

A device operative to prevent interference a signal transmitted from an electronic input device is also provided. The device comprises a software program and a receiving unit connected to a computer host. The software program generates one sequence of frequency-hopping channels for each type of electronic input devices and defines one of the frequency-hopping channels in each sequence as a starting receiving frequency channel. The receiving unit automatically switches receiving frequency to the starting receiving frequency channel according to the corresponding type of electronic devices from which a signal is transmitted, and hops frequency between the frequency-hopping channels of the corresponding type of electronic devices when the signal has been interfered. The hopping operation is not stopped until the interference upon the signal is eliminated.

### BRIEF DESCRIPTION OF THE DRAWINGS

The above objects and advantages of the present invention will be become more apparent by describing in detail exemplary embodiments thereof with reference to the attached drawings in which:
Figure 1 shows an embodiment of signal transceiving structure;
Figure 2 shows setup of activation transceiving signal frequency channels for various electronic input products and the frequency-hopping channels;
Figure 3 is a flow chart showing the automatic frequency-hopping operation of a receiving unit; and
Figure 4 shows the operation flows of preventing interference by signal receiving and automatic frequency hopping.

### DETAILED DESCRIPTION OF THE INVENTION

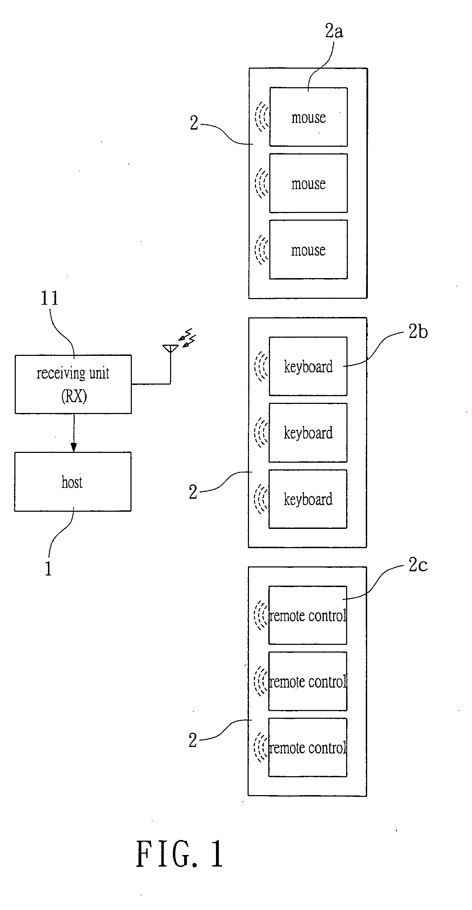

Referring to Figure 1, a signal transceiving structure includes a receiving unit 11 connected to a host 1 and various electronic input devices 2 that have wireless signal transmission function.

The electronic input products 2 include mouse 2a, keyboards 2b, remote controls 2c and audio input devices, for example. Each type of electronic input product may comprise more than one device. For example, in the example as shown in Figure 1, there are three mouse 2a, three keyboards 2b and three remote controls 2c in the structure allowing more than one users to operate input data or command signal transmission.

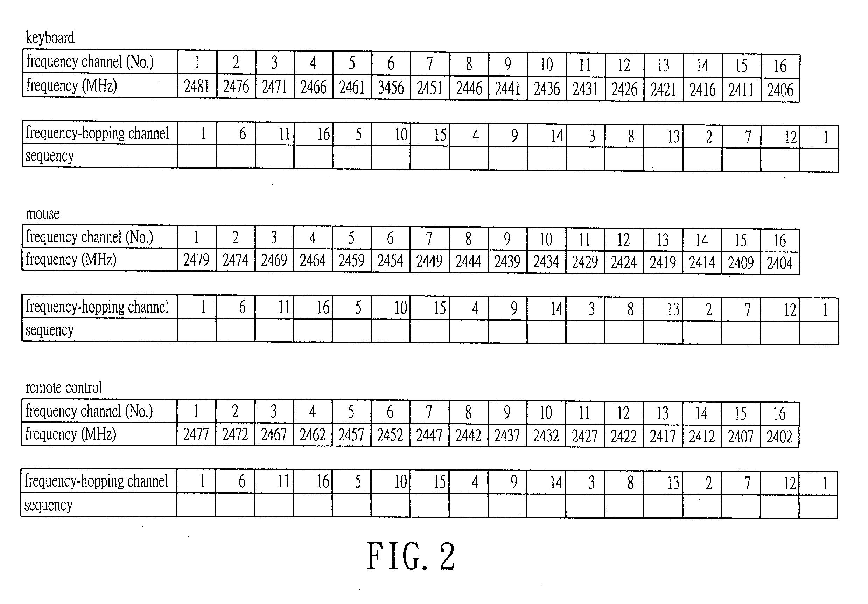

Different signal transmission frequency is set up for different type of electronic input devices 2, such that the receiving unit 11 can set up the corresponding starting receiving frequency channel at the receiving terminal according to the specific signal transmission, so as to establish signal transceiving recognition without interference. For the signals transmitted simultaneously from multiple electronic devices of the same kind, the receiving unit 11 can set up a first frequency-hopping channel according to the corresponding starting receiving frequency channel. For example, as shown in Figure 2, the starting receiving frequency channel and the first frequency-hopping channel of keyboard-type electronic input devices 2b are set at 2481 MHz. The starting receiving frequency channel and the first frequency-hopping channel of the mouse-type electronic input devices 2a are set at 2479 MHz. The remote-control-type electronic input devices 2c have the starting receiving frequency channel and the first frequency-hopping channel set at 2477 MHz. The sub-receiving signal channels for the electronic devices 2 are then defined. By performing the frequency-hopping operation provided by a software program, a continuous frequency-hopping modulation is automatically executed when a signal is interfered upon reception.

In addition, multiple electronic devices of the same type can also be distinguished by setting up an independently generated different signal recognition frequency transmitted with the input data and the commands. Thereby, when the receiving unit 11 receives signals transmitted from multiple electronic devices of the same type, different signal recognition frequencies can be set up in combination with the automatic frequency-hopping function of the receiving unit 11. Thereby, the interference can be further prevented.

The signal recognition frequencies include signal frequencies arranged by multiple bits such as 4 bits, 5-bits, and 6-bits to provide transmissions at different signal frequencies for the electronic input products 2.

The receiving unit 11 connected to the host 1 includes a RF receiving terminal which one-directionally receives input data and command signals from various types of electronic input products 2. Because the receiving unit 11 has the automatic frequency-hopping function, the received signal is hopping to another frequency channel according to a predetermined hopping sequence when it is interfered.

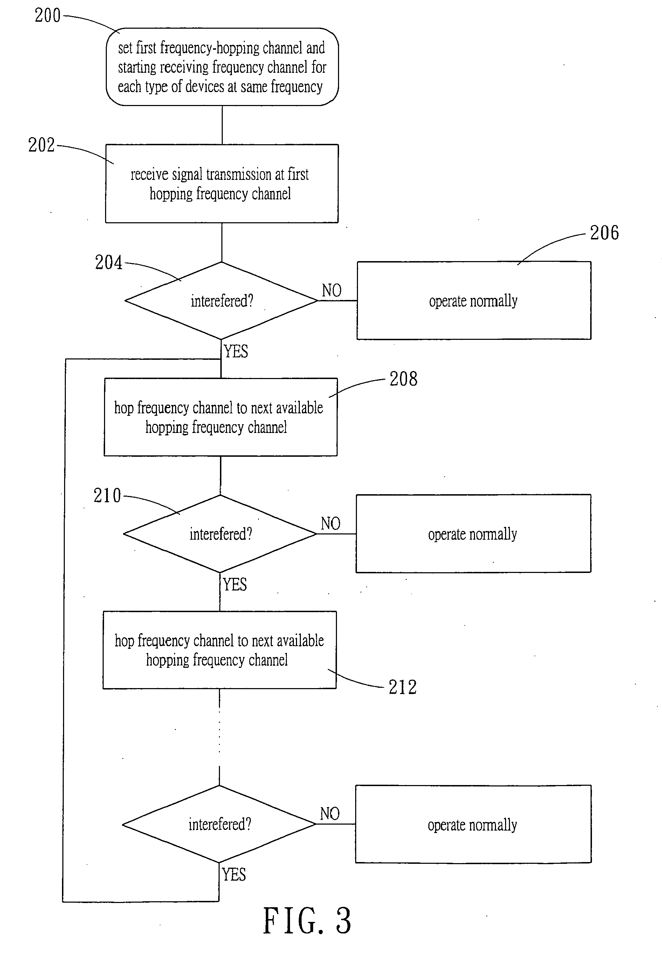

The frequency-hopping operation of the receiving unit 11 is illustrated in Figure 2. A software program is activated to set up the operation frequency of the receiving unit 11 between 2401 MHz and 2481 MHz. That is, there are 80 frequency channels available for the receiving unit 11. In this embodiment, the frequency difference between neighboring channels for the same type of electronic devices 2 is 5 MHz. Meanwhile, a plurality of frequency-hopping channels is set up by the software program. As shown in Figure 2, the first hopping-frequency channel for the keyboards 2b, the mouse 2a and the remote controls 2c are set at 2481 MHz, 2479 MHz and 2477 MHz, respectively. Sixteen hopping-frequency channels are set up for each type of the electronic devices 2, and the frequency gap between the neighboring channels is 5 MHz. The hopping sequence is also set up as shown in Figure 2. For example, for the keyboards 2b, the first hopping frequency channel is set at 2481 MHz, and the second hopping frequency channel is set at 2416 MHz, and the 16^{th} hopping frequency 2466 MHz. The hopping operation is further illustrated in Figure 3.

In step 200 as shown in Figure 3, the first frequency-hopping channel and the starting receiving frequency channel for each type of devices are set at the same frequency.

In step 202, when the receiving unit 11 receives the signal transmitted from the electronic input devices 2, the signal is received at the starting receiving frequency channel, that is, the first hopping frequency channel of the specific type of the electronic input device 2. In step 204, the receiving unit 11 determines whether such signal is interfered.

When no interference is found in step 204, transmission of the signal is continued, and the electronic input product 2 operates normally in step 206.

If the signal is found being interfered in step 204, the receiving unit 11 automatically hops the frequency channel to the next available hopping frequency channel in step 208. In step 210, whether the signal is interfered is determined. If the interference continues, the frequency channel is hopped to another available hopping frequency in step 212. The frequency hopping will not be terminated until the interference is eliminated. Referring to Figure 1, when a signal is transmitted by one keyboard 2b, the receiving unit 11 automatically hops the frequency channel at 2481 to receive such signal. When the signal is found being interfered in step 204, the receiving unit 11 hops the receiving channel to 2416 MHz. If the interference continues in step 210, the frequency is hopped to 2431 MHz. Thereby, the signal transmitted from each of the electronic input device 2 will be received at different frequency channel to prevent from being interfered by signals transmitted from other electronic input devices 2.

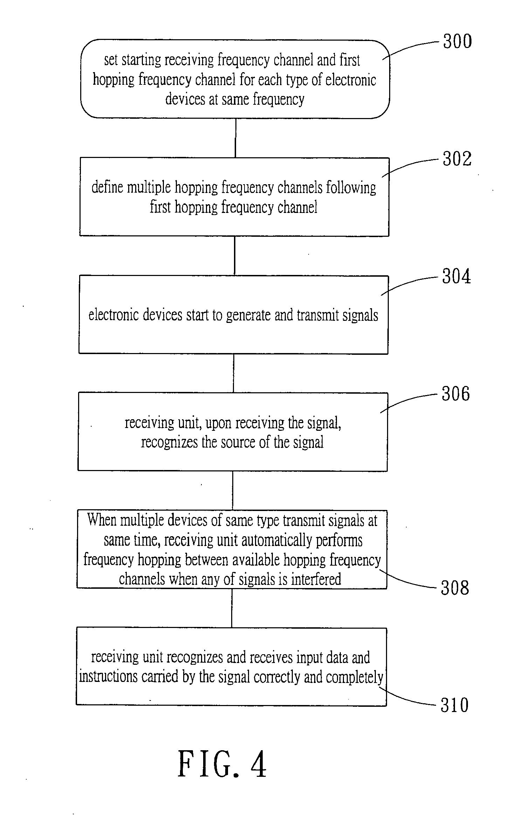

Figure 4 shows a process flow of the method of preventing interference upon signals transmitted from electronic input channels. In step 300, the starting receiving frequency channel and the first hopping frequency channel for each type of electronic devices are set at the same frequency. For example, the first hopping frequency channels for the keyboards 2b, the mouse 2a and the remote controls 2c are set at 2481 MHz, 2479 MHz, and 2477 MHz, respectively.

In step 302, a plurality of hopping frequency channels following the first hopping frequency channel are defined. The hopping frequency channels are preferably separate from each other by 5 MHz, and preferably, there are 16 hopping frequency channels for each type of products. In the embodiment as shown in Figure 2, the available hopping frequency channels for the keyboards 2b, the mouse 2a and the remote controls 2c range between 2481 MHz and 2406 MHz, 2479 MHz and 2404 MHz, and 2477 MHz and 2402 MHz, respectively.

In step 304, the electronic devices 2 start to generate and transmit signals that carry input data and command sequences.

In step 306, the receiving unit 11, upon receiving the signal, recognizes the source of the signal, such that the electronic devices 2 can perform normal operations.

When multiple devices of the same type transmit signals at the same time, the receiving unit 11 automatically performs frequency hopping between the available hopping frequency channels when any of the signals is interfered. Thereby, a complete and correct signal can be received in step 308.

After receiving the correct and complete signal, the receiving unit 11 recognizes and receives the input data and instructions carried by the signal in step 310.

While the present invention has been particularly shown and described with reference to preferred embodiments thereof, it will be understood by those of ordinary skill in the art the various changes in form and details may be made therein without departing from the spirit and scope of the present invention as defined by the appended claims.

## Claims

1. A method of preventing interfering signals transmitted from electronic input devices, comprising:
providing a receiving unit operative to automatically hop frequency when an incoming signal transmitted from any of the electronic input devices is interfered; and
determining a sequence of frequency-hopping channels for each type of electronic input devices and defining one of the frequency-hopping channels as a starting receiving frequency channel for the corresponding type of electronic input devices.

2. The method of Claim 1, further comprising activating a software program to determine the sequences of frequency-hopping channels and execute frequency-hopping operation of the receiving unit.

3. The method of Claim 1, wherein the frequency-hopping channels for each sequence are separate from each other by 5 MHz.

4. The method of Claim 1, wherein the sequences of frequency-hopping channels are defined between 2041 MHz and 2081 MHz.

5. The method of Claim 1, further comprising a step of transmitting a signal from at least one of the electronic input devices.

6. The method of Claim 5, further comprising a step of switching frequency to the starting receiving frequency channel corresponding to the electronic input device.

7. The method of Claim 6, further comprising a step of checking whether the signal has been interfered.

8. The method of Claim 7, further comprising a step of hopping frequency of the receiving unit to the next available frequency-hopping channel in the sequence of the electronic input device when the signal has been interfered.

9. The method of Claim 8, further comprising a step of continuously hopping frequency of the receiving unit until interference of the signal is eliminated.

10. The method of Claim 1, further comprising transmitting signals from at least one of keyboards, mouse, remote controls and audio input devices.

11. The method of Claim 10, wherein the starting receiving frequency channel of the keyboards is 2481 MHz, 2479 MHz or 2477 MHz.

12. The method of Claim 10, wherein the starting receiving frequency channel of the mouse is 2481 MHz, 2479 MHz or 2477 MHz.

13. The method of Claim 10, wherein the starting receiving frequency channel of the remote controls is 2481 MHz, 2479 MHz or 2477 MHz.

14. The method of Claim 10, wherein the starting receiving frequency channel of the audio input devices is 2481 MHz, 2479 MHz or 2477 MHz.

15. A device for preventing interference of signals transmitted from various types of electronic input devices, comprising:
a software program, generating one sequence of frequency-hopping channels for each type of electronic input devices and defining one of the frequency-hopping channels in each sequence as a starting receiving frequency channel;
a receiving unit, operative to switch receiving frequency to the starting receiving frequency channel according to the corresponding type of electronic devices, and to hopping frequency between the frequency-hopping channels of the corresponding type of electronic devices when an incoming signal has been interfered.
